# EUROPEAN PATENT SPECIFICATION

(11) **EP 3 008 321 B1**
(45) Date of publication and mention of the grant of the patent: **14.11.2018**
(21) Application number: 13886804.7
(22) Date of filing: 14.06.2013
(51) Int. Cl.: F02K 1/12

(54) **VARIABLE EXHAUST NOZZLE FOR A JET ENGINE AND METHOD FOR VARYING THE NOZZLE**
VARIIERBARE ABGASDÜSE FÜR EIN DÜSENTRIEBWERK UND VERFAHREN ZUR ÄNDERUNG DER DÜSE
BUSE D'ÉJECTION VARIABLE POUR UN MOTEUR À RÉACTION ET PROCÉDÉ DE VARIATION DE LA BUSE

(43) Date of publication of application: 20.04.2016
(73) Proprietor: Saab AB, 581 88 Linköping (SE)
(72) Inventor: BJERKEMO, Jacob, S-582 53 Linköping (SE)
(74) Representative: Zacco Sweden AB
(86) International application number: PCT/SE2013/050695
(87) International publication number: WO 2014/200401

(56) References cited:
- WO-A1-92/03649
- GB-A- 984 925
- GB-A- 2 230 299
- US-A- 2 780 056
- US-A- 4 591 097
- US-A- 5 328 098
- US-A- 5 437 411
- US-A- 5 667 140
- US-A- 5 813 609
- US-A- 5 813 609
- US-A1- 2005 060 984
- US-A1- 2005 210 861
- US-A1- 2005 210 861
- US-A1- 2006 090 470

## Description

### TECHNICAL FIELD

The present invention relates to a variable exhaust nozzle for a jet engine according to the preamble of claim 1. The invention also relates to an aircraft comprising a variable exhaust nozzle and a method for varying a variable exhaust nozzle for a jet engine.

### TECHNICAL BACKGROUND

Jet engines are widely used to power aircraft. Jet engines provide propulsive power by generating a high velocity stream of gas which is exhausted rearwards through an exhaust nozzle. Variable convergent-divergent exhaust nozzles are commonly used in aircraft. A variable convergent-divergent exhaust nozzle comprises a convergent portion with a decreasing cross sectional area followed by a divergent portion with an increasing cross sectional area. The variable convergent-divergent exhaust nozzle comprises, between the convergent portion and the divergent portion, a cross sectional area called the nozzle throat area and, at the end of the divergent portion (where the exhaust leaves the nozzle), a cross sectional area called the nozzle exit area.

The optimum nozzle throat area and nozzle exit area of a variable convergent-divergent exhaust nozzle depends on a variety of factors, such as the ambient conditions of temperature and pressure, and the mass flow of exhaust gas, which depends on the operating condition of the engine. In jet engines, in particular, engines having some sort of thrust augmentation such as an afterburner, it is desirable to cause a variation of the nozzle throat area and the nozzle flow exit area to maintain high engine performance under a wide range of operating conditions. The nozzle exit area divided by the nozzle throat area is called the nozzle area ratio. An ideal nozzle area ratio allows the gases of combustion to convert pressure into kinetic energy with the highest efficiency.

The variable convergent-divergent exhaust nozzle comprises inter-connected flaps movable between a first position, wherein they together define a minimum nozzle throat area and a minimum nozzle exit area, and a second position, wherein they together define a maximum nozzle throat area and a maximum nozzle exit area.

One problem associated with variable convergent-divergent exhaust nozzles is that the displacement of the movable flaps will result in gaps between the flaps and adjacent flaps. These gaps will cause leakage of the exhaust gas, which generates vortices and so reduces the nozzles efficiency and accordingly the performance of the jet engine.

Another problem associated with variable convergent-divergent exhaust nozzles is that the geometric shape of the throat cross section and the geometric shape of the exit cross section, seen towards a plane being perpendicular to the central axis CL, changes during the variation of the nozzle between the first position and the second position. This results in that the flow of exhaust gas through the exhaust nozzle is not being optimal and that the noise from the variable nozzle increases.

An afterburner is an additional component of a jet engine. Its purpose is to provide an increase in thrust, usually for supersonic flight, takeoff etc. The fore part of the variable convergent-divergent nozzle comprises a transition section for connection to the afterburner, which typically is circular in cross-section. The transition section of the nozzle alters the shape from circular cross-section to polygonal cross-section. One way to provide the transition section is to smoothly alter the shape of the afterburner per se by machining the material of the afterburner, which involves high weight. Such transition area is thus desirable since a circular form of the rear part of the nozzle results in a non-optimal flow of exhaust gas through the exhaust nozzle wherein the noise from the variable nozzle would increase, especially since modern airplanes do not need to have an airframe/nacelle that is circular. A nozzle with a circular form of the rear part implies complicated connection to a polygonal outer nozzle.

An example of a known exhaust nozzle is disclosed in document GB-A1-984925. GB-A1-984925 discloses a valve device for controlling the flow of fluid through an annular duct and may be applied for example for controlling the flow of air through an annular duct disposed around a gas turbine jet engine. The valve device comprises a plurality of plates which are arranged side by side and are pivoted to each other at their sides so that they form, a divergent member of variable apex angle. One end of the valve device being pivotally connected to a circular wall of the annular duct. There being arranged hydrauls for moving the other end of the valve device with respect to the annular duct. The motion is made between a closed position in which the flow through the annular duct is relatively small (or zero) and an open position, in which such flow is relatively large. The divergent portion of the valve device is circular in cross-section at one end, and is rectangular in cross section at its opposite end. However, the valve device's geometric shape is not the same during the variation of the valve member between the closed position and the open position.

US5813609 and US2005/210861 show a variable exhaust nozzle according to the prior art. Variable convergent-divergent exhaust nozzles of today are also complex in structure because they comprise many components that move relative to each other. This makes variable convergent-divergent exhaust nozzles expensive to design, manufacture, service maintenance and operate.

As a consequence, in light of the above drawbacks, there is a need of an improved variable exhaust nozzle for a jet engine with increased nozzle efficiency and that is less expensive to design, manufacture, maintain and operate.

One object is to provide a variable exhaust nozzle with a throat cross section and an exit cross section that will assume the same geometric shape in each of said positions.
One object is to provide a variable nozzle which is connectable to a jet engine (and/or afterburner) exhibiting a circular cross section.
One object is to reduce the noise from a variable exhaust nozzle.
One object is to provide a failure safe variable exhaust nozzle.

The foregoing and other objects and advantages of the present invention will be apparent to those skilled in the art, in view of the following detailed description, taken in conjunction with the appended claims and the accompanying drawings.

### SUMMARY OF THE INVENTION

This has been solved by the variable exhaust nozzle for a jet engine according to the characterizing features of claim 1.

This has also been solved by the aircraft comprising a variable exhaust nozzle according to the characterizing features of claim 9 and the method for varying a variable exhaust nozzle for a jet engine according to the steps of claim 10.

Suitably, the variable exhaust nozzle comprises an upstream portion, flap means being pivotally connectable to the jet engine via the upstream portion, wherein the flap means comprises a downstream portion forming a downstream linear edge, actuator means being arranged to actuate said flap means for variation of the nozzles cross sectional area , i.e. the area (extending in a plane transverse to the longitudinal extension of the nozzle) inside the nozzle defined by inner sides of said flap means, between a first position and a second position. Said flap means is skewed. The nozzle comprises shape forming flap means for forming the cross sectional area, and adjacent flap means in the circumferential direction having sliding surfaces in continuous contact during said variation. Said flap means comprises intermediate flap means, being interposed between said shape forming flap means. The flap means also comprises a central flap member and sliding flap members arranged at opposite sides of the central flap member. The upstream end can be constituted of the convergent part of a nozzle, a jet engine or an afterburner. In this context "continuous contact" is defined by that the shape forming flap means and the intermediate flap means are in contact with each other in every position between the first position and the second position. The first position may be a maximum position and the second position may be a minimum position. The continuous contact is achieved due to that the shape forming flap means overlies and acts on the intermediate flap means and to that said variation is provided by said actuator means in such way that an inwardly force is provided counteracting a jet stream force from the jet engine during use. The flap means can also be biased.

Thereby no gaps will occur between a flap means and its adjacent flap means during said variation. This will prevent leakage of exhaust gas. The prevention of leakage of exhaust gas will increase the nozzles efficiency and accordingly increase the performance of the jet engine. The jet engines energy consumption and the noise from the variable exhaust nozzle are also reduced. The fact that each flap means comprises an upstream edge with an arcuate form gives the fore part of the nozzle circular form, thus making the nozzle easy to connect to a (circular) afterburner.

The fact that the sliding flap member is skewed reduces the risk of gaps between the flap means during said variation. Thus further preventing leakage of exhaust gas and in turn further increase the nozzles efficiency and the performance of the jet engine. Also the noise from the variable exhaust nozzle is reduced.

Preferably, the shape forming flap means downstream linear edge being angled. In such way the variable exhaust nozzles cross section will assume the same shape in each of said every position. In turn, the flow of exhaust gases through the exhaust nozzle being optimized and the noise from the variable nozzle will be reduced.

Suitably, the shape forming flap means overlies adjacent flap means within areas defined by the sliding surfaces. Also, the central flap member overlies the sliding flap members within areas defined by the sliding surfaces. In this context "overlies" is defined by that the shape forming flap means and the central flap members are arranged in an outer periphery of the variable exhaust nozzle and abuts the sliding flap members being arranged in an inner periphery of the variable exhaust nozzle. The distance between the outer and inner periphery in radial direction may preferably be defined as half the thickness of a shape forming flap means and central flap member plus half the thickness of a sliding flap member. Preferably, each imaginary periphery line is thus defined as extending centrally in each flap means and flap member sheet metal and parallel with its plane. Preferably, the shape forming flap means is arranged outside an imaginary periphery line and the adjacent flap means is arranged inside the imaginary periphery line.

This will further reduce the risk of gaps between a flap means and its adjacent flap means during said variation because the shape forming flap means and central flap members are overlying the sliding flap members and are counteracting the force from the jet stream. This will in turn further prevent leakage of exhaust gas and in turn further increase the nozzles efficiency and the performance of the jet engine. Thereby a sealing between the flap means is provided.

Preferably, the flap means comprises sheet metal.

Preferably, the actuator means comprises shape forming flap means. The force from the shape forming flap means and the central flap members acting on the sliding flap members counteracts the jet stream force acting on said sliding flap members. Thus, providing an operationally reliable variable exhaust nozzle of rigid and simple design capable of continuous variation to any desired intermediate setting between the first and second position.

Suitably, the number of the shape forming flap means is equal to the number of the intermediate flap means.

Thus a shape forming flap mean will always overlie two adjacent intermediate flap means. Thereby further reduce the risk of gaps between a flap means and its adjacent flap means during said variation at the same time as the geometric shape is of the same shape during said variation. This will further prevent leakage of exhaust gas, which in turn will increase the nozzles efficiency and accordingly increase the performance of the jet engine.

In another aspect of the invention the actuator means comprises an elongated actuator. In a further aspect of the invention the elongated actuator comprises a hydraul.

Suitably, the hydraul cost-effective connected to the hydraulic system of the jet engine.

Suitably, said downstream linear edge of the shape forming flap means exhibits an angle α of about 120°. The angle α being defined between two imaginary lines extending in a plane extending essentially parallel with said cross sectional area. The angle α may also be defined as an angle between two imaginary lines, each of which lies in a plane orthogonally oriented relative the sliding surfaces.

Thus providing a variable exhaust nozzle that is less complex in structure because it comprises few components that move relative to each other. In turn this makes the variable exhaust nozzle less expensive to design, manufacture, maintain and operate.

In a further aspect of the invention the flap means comprises resilient material.

The resilient material makes the flap means able to bend and capable of regaining their original shape after bending and thereby seals said sliding surfaces to each other. This reduces the risk of gaps between the flap means during said variation. Thus further preventing leakage of the exhaust gas and in turn further increase the nozzles efficiency and the performance of the jet engine. Also the noise from the variable exhaust nozzle is reduced.

In yet another aspect of the invention said flap means is pivotally connectable to the upstream end with hinge means. Hinge means arranged pivotally about axes extending in a plane essentially parallel with said cross sectional area.

Said hinge means permits an angle of rotation between said flap means and the upstream end, which allows for variation of the nozzles cross sectional area between a first position and a second position. Thus providing an operationally reliable variable-exhaust nozzle of rigid and simple design that is cost effective to manufacture and easy to maintain.

In another aspect of the invention a sealing is arranged between the shape forming flap means and the intermediate flap means as well as between the central flap member and the sliding flap member for sealing said sliding surfaces.
This reduces the risk of gaps between the flap means during said variation. Thus further preventing leakage of exhaust gas and in turn further increase the nozzles efficiency and the performance of the jet engine. Also the noise from the variable exhaust nozzle is reduced.

Preferably, the variable exhaust nozzle may also constitute a variable convergent-divergent exhaust nozzle comprising a front and rear flap arrangement. The front sliding flap members are skewed for merging with rear sliding flap members in such way that the downstream portion of the flap means forms a downstream linear edge. The front flap arrangement comprises downstream linear edges being parallel with upstream linear edges of the rear flap arrangement providing a sealing.

In yet another aspect of the invention the downstream edges of the exhaust nozzle forming said area is symmetric.

Thereby it is easier to integrate two jet engines in an aircraft.

The present invention is of course not in any way restricted to the preferred embodiments described above, but many possibilities to modifications, or combinations of the described embodiments thereof, should be apparent to a person with ordinary skill in the art without departing from the basic idea of the invention as defined in the appended claims. The variable convergent-divergent exhaust nozzle according to the invention can also constitute a nozzle for reducing infra-red or radar cross section signature of the nozzle. Other objectives, embodiments and advantages of the present invention are described in closer detail in the description and in the subsequent patent claims.

### BRIEF DESCRIPTION OF THE DRAWINGS

The invention will hereinafter be described with reference to embodiments of the present invention and the accompanying schematic drawings, in which:
- Fig. 1: shows a side view of a jet engine comprising a variable convergentdivergent exhaust nozzle according to one aspect of the present invention,
- Fig. 2: shows a perspective view of a variable convergent-divergent exhaust nozzle in a first embodiment and in a first position according to one aspect of the present invention,
- Fig. 3: shows a perspective view of a variable convergent-divergent exhaust nozzle in a first embodiment and in a second position according to one aspect of the present invention,
- Fig. 4: shows a perspective view of a variable convergent-divergent exhaust nozzle in a second embodiment and in a first position according to one aspect of the present invention,
- Fig. 5: shows a cross-sectional view of a variable convergent-divergent exhaust nozzle according to a different aspect of the present invention,
- Figs. 6a-g: show cross-sectional views of variable convergent-divergent exhaust nozzles according to different aspects of the present invention,
- Figs. 7a-d: show enlarged views of variable convergent-divergent exhaust nozzles according to different aspects of the present invention, taken in crosssection A-A in fig. 2,
- Fig. 8: shows a cross-sectional view of a variable convergent-divergent exhaust nozzle according to an aspect of the present invention,
- Fig. 9: shows a variable convergent-divergent exhaust nozzle according to one aspect of the present invention integrated in an airframe,
- Fig. 10a: shows a variable convergent-divergent exhaust nozzle according to one aspect of the present invention enclosed by an outer exhaust nozzle,
- Figs. 10b-c: show a variable convergent-divergent exhaust nozzle according to other aspects of the present invention, and
- Figs. 11a-b: shows flow charts of a method for varying a variable convergentdivergent exhaust nozzle for a jet engine according to the present invention.

### DETAILED DESCRIPTION OF THE INVENTION

Hereinafter, embodiments of the present invention will be described in detail by means of examples with reference to the accompanying drawings, wherein for the sake of clarity and understanding of the invention some details of no importance are deleted from the drawings. The same reference numbers may have been used for the same or similar features throughout the description of the embodiments disclosed below.

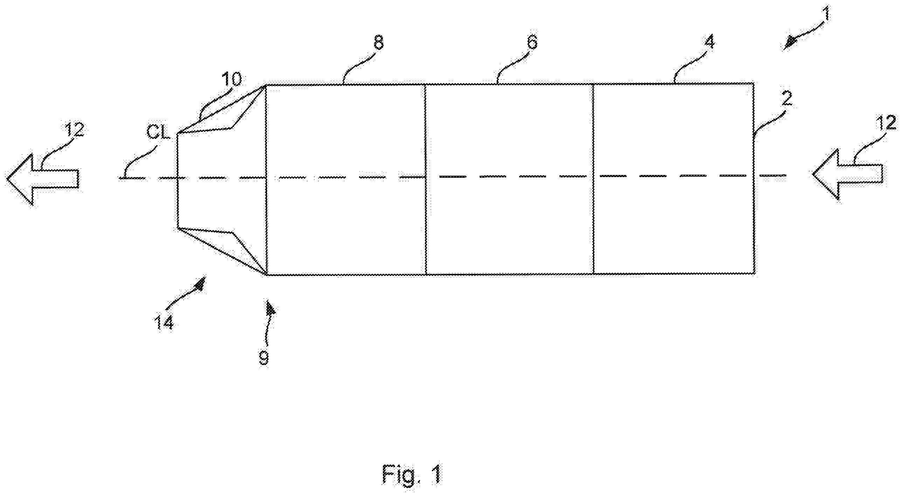

Fig. 1 shows a jet engine 1 comprising an air inlet 2, a compressor section 4, a combustion section 6, a turbine section 8 and an exhaust section 10. Air 12 entering the jet engine 1 through the air inlet 2, being compressed when passing through the compressor section 4. The air 12 is heated for power generating functionality in the combustion section 6. It thereafter passes through the turbine section 8 in a power extraction function and is finally exhausted through the exhaust section 10. The exhaust section 10 comprises the variable exhaust nozzle 14 according to one aspect of the present invention. An afterburner 9 can be provided between the turbine section 8 and the exhaust section 10.

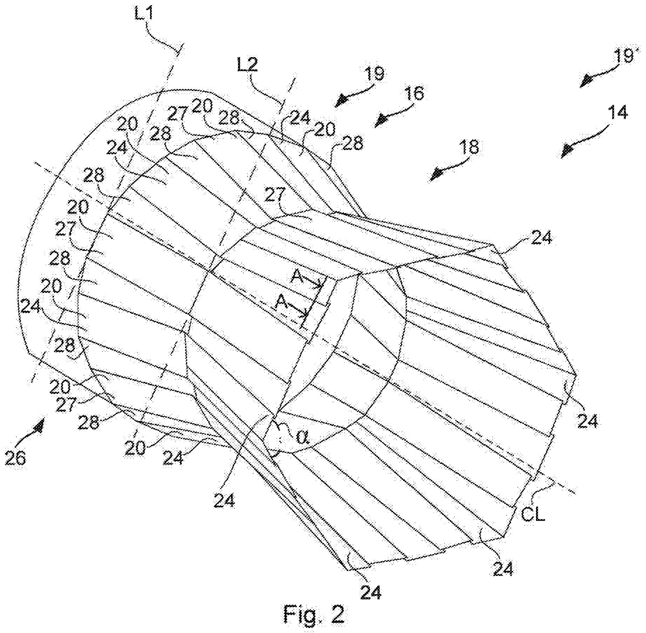

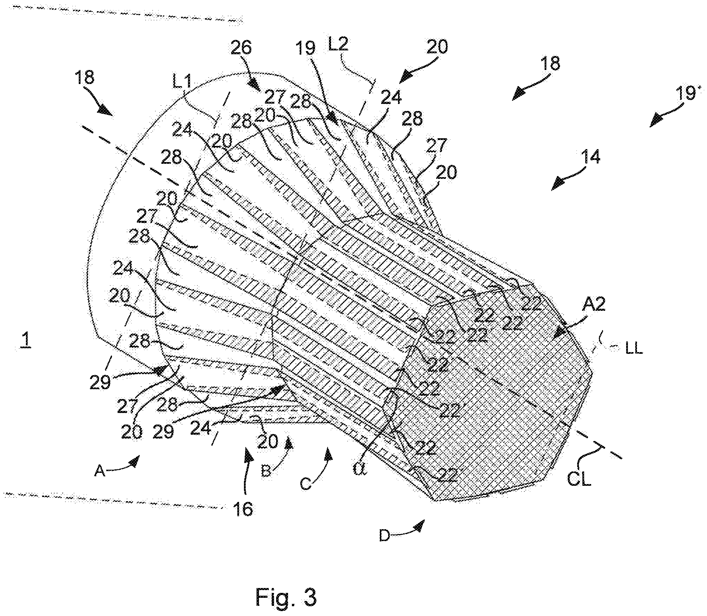

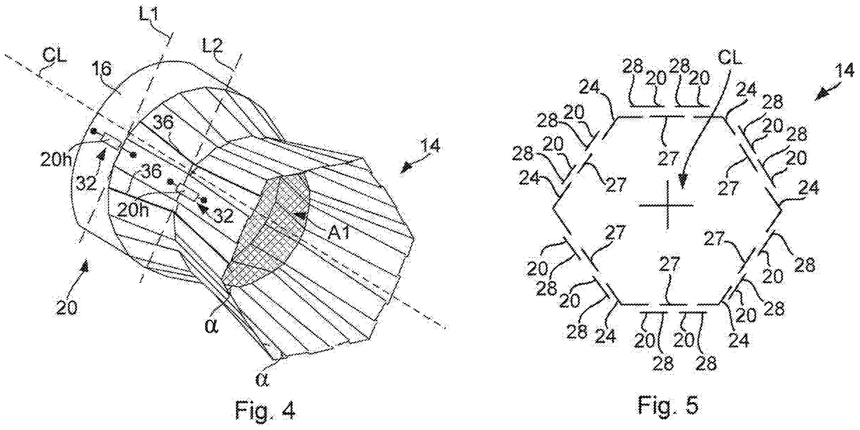

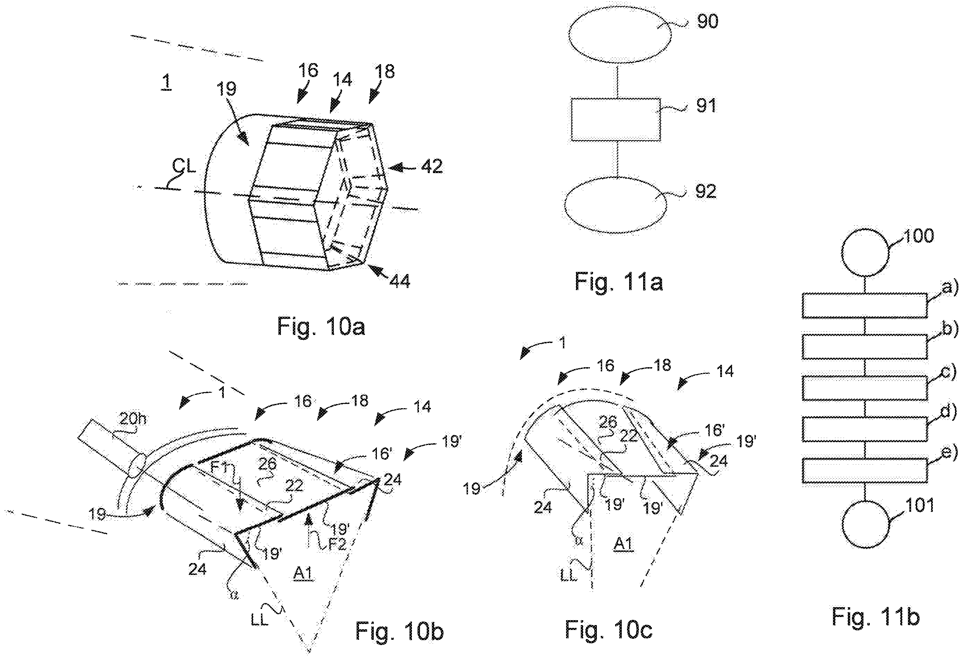

Fig. 2 shows a perspective view of a variable exhaust nozzle 14 according to a first embodiment and in a first position. The variable exhaust nozzle 14 is a convergent-divergent nozzle. The variable exhaust nozzle 14 will be described with reference to both fig. 2 and fig. 3, each of which show a perspective view of a variable exhaust nozzle 14 according to the first embodiment and in a first and second position respectively. The variable exhaust nozzle 14 will also be described with reference to fig. 10b and fig. 10c which show the variable exhaust nozzle 14 according to other aspects of the invention. The variable convergent-divergent exhaust nozzle 14 for a jet engine 1 comprises an upstream end 16 with a round shape. The variable convergent-divergent exhaust nozzle 14 comprises a plurality of flap means 18, which are circumferentially arranged about and extending along (and/or essentially parallel with) a central axis CL of the upstream end 16. The plurality of flap means 18 is being pivotally connectable (hinged) to the upstream end 16. Each flap means 18 comprises an upstream edge 19 with an arcuate form and a downstream edge 19' with a linear form. The variable convergent-divergent exhaust nozzle 14 further comprise actuator means 20 being arranged to actuate said plurality of flap means 18, for variation of the convergent-divergent nozzles 14 first cross sectional area A1 (as seen in fig. 4), between the first position and the second position, and second cross sectional area A2 (as seen in fig. 3), between the first position and the second position. The first cross sectional area A1 is the cross sectional area of the nozzle throat (the throat portion between the convergent portion and the divergent portion) and the second cross sectional area A2 is the cross sectional area of the nozzle exit. The actuator means 20 is arranged to operate all flap means 18 simultaneously. The first cross sectional area A1 and the second cross sectional area A2 can be varied individually. The flap means 18 in the convergent portion are individually adjustable in angular position with respect to the upstream end 16 by rotation of the flap means 18 about an axis L1 and the flap means 18 in the divergent portion are individually adjustable in angular position with respect to the convergent portion by rotation of the flap means 18 about an axis L2. The flap means 18 defines a maximum exhaust area in the first position and a minimum exhaust area in the second position.

Said flap means 18 in the convergent portion is pivotally connectable to the upstream end 16 with hinge means 29 and said flap means 18 in the divergent portion is pivotally connected to the convergent portion 18 with hinge means 29 as is shown in fig. 3. The flap means comprises resilient material. For example, the flap means 18 comprises ceramic material, steel, aluminium, titanium, nickel alloy or other materials, which is flexible enough to permit the flap means 18 to flex when the variable convergent-divergent exhaust nozzle 14 is adjusted between the first and the second position. Preferably, the flap means 18 also comprises heat-resistant material due to that the flap means 18 is subjected to high heat from the jet engines 1 jet stream.

The respective flap means 18 comprises shape forming flap means 24 and intermediate flap means 26. Said intermediate flap means 26 is interposed between the shape forming flap means 24. The intermediate flap means 26 comprises a central flap member 27 and a sliding flap member 28 on each side of the central flap member 27. Each shape forming flap means 24, each central flap member 27 and each sliding flap member 28 comprise a sliding surface 22, 22' arranged in continuous contact with adjacent flap means 18 during said variation. The jet stream of the jet engine 1, during use, tends to press the sliding flap members 28 radially outwardly. The sliding flap members 28 is therefore also sufficiently stiff to resist pressure loads from the jet engines 1 jet stream during use.

The respective shape forming flap means 24 comprises a bending line. The portions on each side of the bending line are skewed. The central flap members 27 are planar and the sliding flap members 28 are skewed. The sliding flap members 28 are skewed so that they fit between the shape forming flap means 24 and the central flap members 27 thus making the variable convergent-divergent exhaust nozzle 14 less leak prone. The respective sliding flap members 28 are skewed between a first portion upstream end A and a first portion downstream end B and also between a second portion upstream end C and a second portion downstream end D. The sliding flap members 18 in the convergent part being skewed such that the downstream edge 19 in the first portion upstream end A merges with the engine 1. The downstream edges 19' in the first portion downstream end B and the upstream edges 19 in the second portion upstream end C is in line with each other such that they are collinear. The sliding flap members 18 skews between the second portion upstream end C and the second portion downstream end D in such way that the downstream edge 19' in the second portion downstream end D is collinear with a linear line LL. The central flap member 27 can be arcuated at the first portion upstream end A. The upstream edge of the flap means 18 in the divergent portion of the nozzle 14 is linear. The downstream edge of the flap means 18 in the divergent portion is angled. Thus the upstream edge of the nozzle 14 is not parallel with the downstream edge.

The shape forming flap means 24 and the central flap members 27 is arranged to be in said continuous contact with the adjacent sliding flap members 28 such that the shape forming flap means 24 and the central flap members 27, within an area defined by said sliding surface 22, 22', overlies the sliding flap members 28.

The total number of shape forming flap means 24 and central flap members 27 is preferably equal to the number of the sliding flap members 28. Preferably, the number of shape forming flap means 24 is six, the number of central flap members 27 is six and the number of sliding flap members 28 is twelve. The shape forming flap means 24 and the central flap members 27 of the variable convergent-divergent nozzle 14 is being constituted of said actuator means 20. The sliding flap member 28 is pressed outwardly against the shape forming flap means 24 and the central flap members 27 during use. The downstream edge 19' of said shape forming flap means 24 has an angled form with an angle α. Said angle α is preferably about 120°. Thereby giving the variable convergent-divergent exhaust nozzle 14 a hexagonal second cross section A2. A hexagonal shape reduces the aerodynamic losses of the variable convergent-divergent exhaust nozzle 14. Said first area A1 and said second area A2 are symmetric. Embodiments described in figs. 2 and 3 do not comprise additional sealing elements (see fig 4).

Fig. 4 shows a perspective view of a variable convergent-divergent nozzle 14 in a second embodiment and in a first position. The first embodiment and the second embodiment of the variable convergent-divergent exhaust nozzle 14 is the same except from that the actuator means 20h of the variable exhaust nozzle14 in the second embodiment comprises an elongated actuator 32, in this embodiment a hydraul, and that the variable convergent-divergent exhaust nozzle 14 comprises a sealing 36 arranged between the shape forming flap means 24 and the sliding flap members 28 and between the central flap members 27 and the sliding flap members 28 for sealing said sliding surfaces 22, 22' thus making the variable exhaust nozzle 14 less leak prone. Hydrauls are connected between the divergent portion and the convergent portion of the nozzle 14. It is also possible to connect the hydrauls between the divergent portion of the nozzle 14 and the upstream end 16.

Fig. 5 shows a cross-sectional view of a variable convergent-divergent exhaust nozzle 14 in a third embodiment according to the present invention. The third embodiment of the variable convergent-divergent exhaust nozzle 14 is the same as the first and second embodiment of the variable convergent-divergent exhaust nozzle 14 except from that the sliding flap members 28 are overlying the shape forming flap means 24 and the central flap members 27 and that the sliding flap members 28 are being constituted of said actuator means 20.

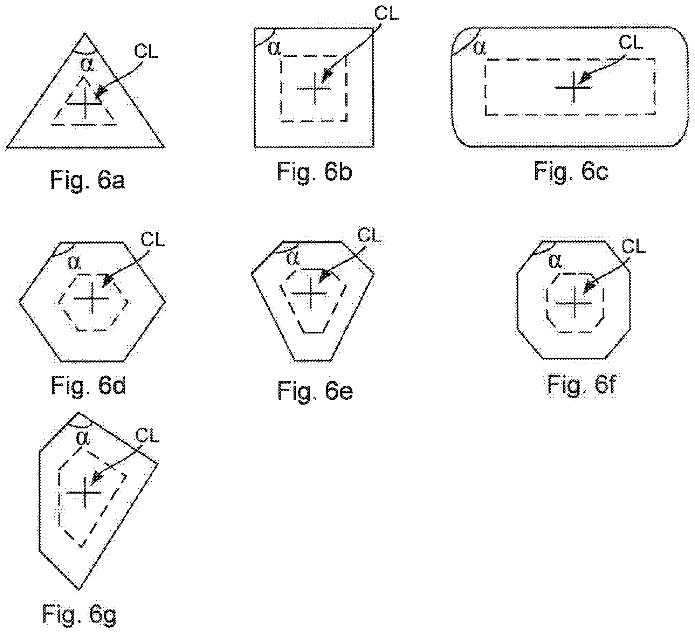

Fig. 6a shows a cross-sectional view of a variable convergent-divergent exhaust nozzle 14 in a fourth embodiment according to the present invention. Fig. 6b shows a cross sectional view of a variable convergent-divergent exhaust nozzle 14 in a fifth embodiment according to the present invention. Fig. 6c shows a cross-sectional view of a variable convergent-divergent exhaust nozzle 14 in a sixth embodiment according to the present invention. Fig. 6d shows a cross-sectional view of a variable convergent-divergent exhaust nozzle 14 in the first, second and third embodiment according to the present invention. Fig. 6e shows a cross-sectional view of a variable convergent-divergent exhaust nozzle 14 in a seventh embodiment according to the present invention. Fig. 6f shows a cross-sectional view of a variable convergent-divergent exhaust nozzle 14 in an eight embodiment according to the present invention. Fig. 6g shows a cross-sectional view of a variable convergent-divergent exhaust nozzle 14 in a ninth embodiment according to the present invention.

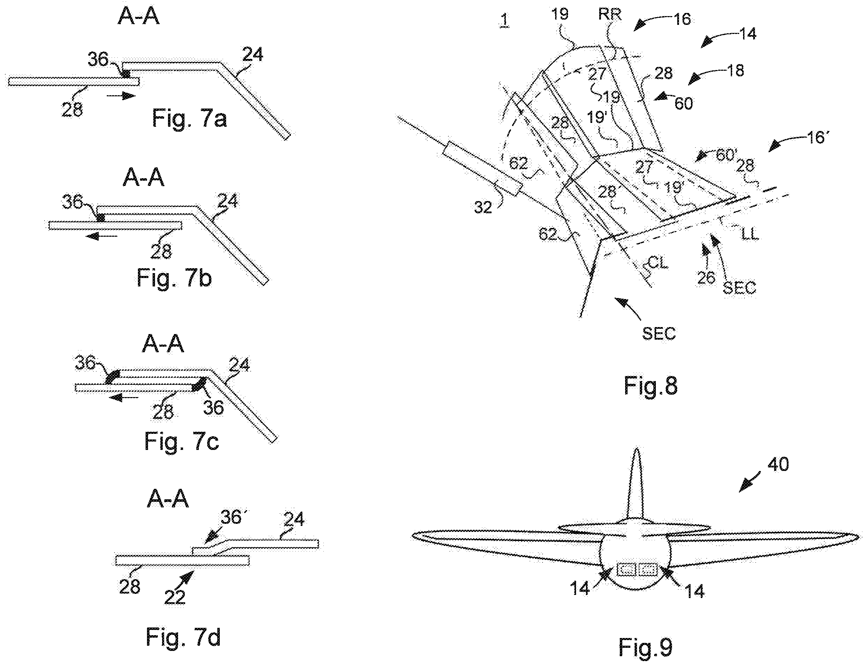

The variable convergent-divergent exhaust nozzles 14 cross section in fig. 6a is triangular, symmetric and has equal angles α, the cross section in fig 6b is squared, symmetric and has equal angles α, the cross section in fig. 6c is rectangular, symmetric and has equal angles α, the cross section in fig. 6d is hexagonal, symmetric and has equal angles α, the cross section in fig. 6e is hexagonal, symmetric and do not have equal angles α, the cross section in fig. 6f is octagonal, symmetric and has equal angles α, and the cross section in fig. 6g is pentagonal and asymmetric. Said first position is shown in solid lines and said second position is shown in dashed lines. It is possible for the variable convergent-divergent exhaust nozzles 14 cross section to have any desired shape thus providing a variable convergent-divergent exhaust nozzle 14 that is easy to integrate in an airframe 40 (shown in fig. 8). Thereby the need to adapt the design of the airframe 40 (shown in fig. 8) to the shape of the variable convergent-divergent exhaust nozzle 14 is less restricting, allowing more freedom in the design of the airframe 40.

Figs. 7a - 7d show an enlarged view of a variable convergent-divergent exhaust nozzle 14 according to different aspects and in cross-section A-A from fig. 2. Fig. 7a shows the variable convergent-divergent exhaust nozzle 14 in the first position. Fig. 7b and 7c shows the variable convergent-divergent exhaust nozzle 14 in the second position. Fig. 7d shows the variable convergent-divergent exhaust nozzle 14 in a position between the first and second position. It is the divergent portion that is shown in fig. 7a-d and described hereafter, but the same is also applicable for the convergent portion. It is also the shape forming flap means 24 and the sliding flap member 28 that is shown in fig. 7a-d and described hereafter, but the same is also applicable for the central flap member 27 and the sliding flap member 28. The arrows show the shape forming flap means 24 direction of movement. As described before the variable convergent-divergent exhaust nozzle 14 can comprise a sealing 36 arranged between the shape forming flap means 24 and the sliding flap members 28 thus making the variable convergent-divergent exhaust nozzle 14 less leak prone. The sealing 36 is preferably attached to the shape forming flap means 24 or integrated with the shape forming flap means 24 and is sliding along the surface of the sliding flap members 28. Preferably, the sealing 36 comprises ceramic material thus providing a heat resistant and wear resistant sealing 36. The sealings 36 in fig. 7c are arcuated and fig. 7c shows two sealings 36 arranged between the shape forming flap means 24 and the sliding flap members 28. It is possible for the sealing 36 shown in fig. 7a and 7b to be moveably arranged between the shape forming flap means 24 and the sliding flap members 28. If the shape forming flap means 24 or the sliding flap members 28 comprises a non rigid material a seal 36' (shown in fig. 7d) between the shape forming flap means 24 and the sliding flap members 28 can be provided by means of arcuated edges or a simple joggle of the edge of the shape forming flap means 24.

Fig. 8 shows a cross-sectional view of a variable convergent-divergent exhaust nozzle according to an aspect of the present invention. The nozzle 14 comprises flap means 18. The flap means 18 being connected to the engine 1 via hinge means arranged at an upstream portion 16 of the flap means 18. The flap means 18 comprises an upstream edge 19 having a linear or semi-curved or curved shape (arcuate geometric shape) seen towards a plane being perpendicular to the central axis CL. The flap means 18 being divided into a front flap arrangement 60 and a rear flap arrangement 60'. The front and rear flap arrangements 60, 60' are mounted in sections SEC, each of which section SEC having a linear end (downstream edge 19'). The sections SEC together form the nozzles 14 shape. Each flap arrangement 60, 60' comprises corner flaps 62 for holding the shape of the cross sectional area (i.e. the geometrical shape) in all positions between the first and second positions. Each flap arrangement 60, 60' comprises intermediate flap arrangements 26 each comprising central flaps 27 and sliding flaps 28. The central flaps 27 of the rear flap arrangement 60' are made flat. The upstream edge 19 of the respective central flap 27 of the front flap arrangement 60 being curved having the same radius as the curvature of the engine fundament, onto which the nozzle being connected. It is possible for the upstream edge 19 of the front flap arrangement 60 to be linear. The downstream edges 19' of the central flaps 27 of the rear flap arrangement 60' being linear. Also the downstream edges 19' of the central flaps 27 of the front flap arrangement 60 being linear. In such way is effective achieved a possibility to achieve a sealed hinge without any leakage of exhaust gas. The respective sliding flap 28, 28' of the front flap arrangement 60 and the rear flap arrangement 60' being skewed in such way that the sliding flap 28 of the front flap arrangement 60 is made skewed for merging with the sliding flap 28 of the rear flap arrangement 60' (wherein the respective sliding flaps 28 being arranged pair wise in tandem parallel with the central axis CL). A respective pair of sliding flaps 28, 28' being arranged on both sides of each pair of central flaps 27 (front and rear). However, the skewness of each pair of sliding flaps 28 being set to turn against each other in a symmetrically manner for reaching a sealed connection between the central flaps 27 and neighbouring sliding flaps 28 on both sides thereof. The respective skewness of the (rear) sliding flaps 28 is set such that the downstream edges 19' of the flap means 18 (for each section SEC) will form a linear line LL. RR is the circular fundament of the engine 1.

Fig. 9 shows two variable convergent-divergent exhaust nozzles 14 integrated in an airframe 40 according to one aspect.

Fig. 10a shows a variable convergent-divergent exhaust nozzle 14 according to one aspect enclosed by an outer exhaust nozzle 42. The variable convergent-divergent exhaust nozzle 14 and the outer nozzle 42 are in this embodiment attached to each other with hinge means 44. It is also possible to not attach them to each other and instead slidingly arrange them to each other.

Fig. 11a illustrates a flow chart of a method for varying a variable exhaust nozzle 14 for a jet engine 1, according to one aspect of the invention. The method starts in Step 90. In Step 91 is provided a method for varying a variable exhaust nozzle 14 for a jet engine 1. In Step 92 the method is fulfilled.

Fig. 11b shows a flow chart of the method for varying a variable exhaust nozzle 14 for a jet engine 1 according to the present invention. The method comprises the steps of: 100) Starting of the method.
a) Providing flap means 18 (as described in previous figures) by arranging the flap means 18 to the upstream end 16 via hinges. The flap means 18 is skewed.
b) Actuating said flap means 18, 24 for variation of the nozzles 14 cross sectional area (A1, A2) between a first position and a second position by means of actuator means 20, 20h, 24, 27, 62 (as described in previous figures), wherein the plurality of flap means 18 comprises shape forming flap means 24, central flap members 27 and sliding flap members 28. The shape forming flap means 24 and the central flap members 27 overlie and act on the sliding flap members 28. The flap means is made of sheet metal.
   The actuator means 20 comprises a hydraul.
c) Providing continuous contact between adjacent flap means 18 via a sliding surface 22, 22' (as described in previous figures) of respective flap means 18 during said variation.
d) Actuating a shape forming flap means 20, 24, 62 of the flap means 18 by means of the actuator means 20 to provide said variation.
e) providing said variation by said actuator means 20, 20h, 24, 27, 62 in such way that an inwardly force F1 is provided counteracting a jet stream force F2 from the jet engine 1 during use.
   101) Stopping of the method.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. It is possible for one hydraul to actuate one flap means. It is also possible for one hydraul to actuate two or more flap means. The elongated actuator can also comprise a pneumatic actuator. It is also possible for the actuator means to comprise an electric engine or be cable-operated. The rotation of all flap means occurs at the same time, i.e. synchronously. Preferably, all flap means rotate with the same angular velocity. But it is also possible for the flap means to not rotate with the same angular velocity, for example for asymmetric nozzles. The flap means do not need to comprise metal sheet. They can be of forgings, ceramic, steel, aluminium, titanium, nickel or alloy as well. The shape forming flap means do not need to be sharp edged. They can have any suitable shape in its cross section (seen in a plane transverse to the sliding surfaces). They can for example have a rounded corner shape.

## Claims

1. A variable exhaust nozzle (14) for a jet engine (1), the nozzle (14) comprises an upstream portion (16), flap means (18) being pivotally connectable to the jet engine (1) via the upstream portion (16), the flap means (18) comprises a downstream portion (16') forming a downstream linear edge (19'), actuator means (20, 20h) being arranged to actuate said flap means (18) for variation of the nozzles (14) cross sectional area (A1, A2) between a first position and a second position,
the flap means (18) comprises shape forming flap means (24, 62) for forming the cross sectional area (A1, A2) and intermediate flap means (26), being interposed between said shape forming flap means (24, 62), wherein said intermediate flap means (26) comprises a central flap member (27) and sliding flap members (28) arranged at opposite sides of the central flap member (27), wherein the shape forming flap means (24), the central flap member (27) and the sliding flap members (28) have sliding surfaces (22, 22') in continuous contact during said variation,
**characterized in that**
the sliding flap members (28) are skewed.

2. The nozzle according to claim 1, wherein the shape forming flap means (24) downstream linear edge (19') being angled.

3. The nozzle according to any of the preceeding claims, wherein the shape forming flap means (24) overlies adjacent flap means (18, 26, 28) within areas defined by the sliding surfaces (22, 22').

4. The nozzle according to any of claims 1 to 3, wherein the central flap member (27) overlies the sliding flap members (28) within areas defined by the sliding surfaces (22, 22').

5. The nozzle according to any of the preceeding claims, wherein the actuator means comprises shape forming flap means (24).

6. The nozzle according to any of the preceeding claims, wherein said downstream linear edge (19') of the shape forming flap means (24) exhibits an angle (α) of about 120°.

7. The nozzle according to any of the preceeding claims, wherein the nozzle is a convergent-divergent nozzle (14) comprising a front (60) and rear (60') flap arrangement, front sliding flap members (28) are skewed for merging with rear sliding flap members (28') in such way that the downstream portion (16') of the flap means forms a downstream linear edge (19').

8. The nozzle according to claim 7, wherein the front flap arrangement (60) comprises downstream linear edges (19') being parallel with upstream linear edges (19) of the rear flap arrangement (60') providing a sealing.

9. An aircraft comprising a variable exhaust nozzle (14) according to any of the preceeding claims 1 to 8.

10. A method for varying a variable exhaust nozzle (14) for a jet engine (1), comprising the steps:
a) providing flap means (18) pivotally connectable to the jet engine via an upstream portion of the nozzle, wherein said flap means (18) comprise intermediate flap means (26) and shape forming flap means (24, 62), wherein the intermediate flap means (26) is interposed between the shape forming flap means (24, 62), wherein said intermediate flap means (26) comprises a central flap member (27) and sliding flap members (28) arranged at opposite sides of the central flap member (27), wherein the sliding flap members (28) are skewed,
b) actuating said flap means (18, 24, 26, 27, 28, 62) for variation of the nozzles (14) cross sectional area (A1, A2) between a first position and a second position by means of an actuator means (20, 20h,),
c) providing continuous contact between adjacent flap means (18, 24, 26, 27, 28, 62) via a sliding surface (22, 22') of respective flap means (18, 24, 26, 27, 28, 62) during said variation.

11. The method according to claim 10, further comprising the step: d) actuating shape forming flap means (20, 24, 62) for providing said variation.

12. The method according to claim 10 or 11, further comprising the step:
e) providing said variation by said actuator means (20, 20h, , 27, 62) in such way that an inwardly force (F1) is provided counteracting a jet stream force (F2) from the jet engine (1) during use.

## Patentansprüche

1. Variierbare Abgasdüse (14) für ein Düsentriebwerk (1), wobei die Düse (14) einen stromaufwärtigen Abschnitt (16) umfasst, wobei die Klappeneinrichtung (18) über den stromaufwärtigen Abschnitt (16) mit dem Düsentriebwerk (1) schwenkbar verbindbar ist, wobei die Klappeneinrichtung (18) einen stromabwärtigen Abschnitt (16') umfasst, der eine stromabwärtige lineare Kante (19') bildet, wobei die Betätigungseinrichtung (20, 20h) so angeordnet ist, dass sie die Klappeneinrichtung (18) zur Änderung des Querschnittsbereichs (A1, A2) der Düse (14) zwischen einer ersten Position und einer zweiten Position betätigt,
die Klappeneinrichtung (18) eine formgebende Klappeneinrichtung (24, 62) zum Bilden der Querschnittsfläche (A1, A2) und der Zwischenklappeneinrichtung (26) umfasst, die sich zwischen der formgebenden Klappeneinrichtung befindet (24, 62), wobei die Zwischenklappeneinrichtung (26) ein zentrales Klappenelement (27) und die verschiebbaren Klappenelemente (28) umfasst, die an entgegengesetzten Seiten des zentralen Klappenelements (27) angeordnet sind, wobei die formgebende Klappeneinrichtung (24), das zentrale Klappenelement (27) und die verschiebbaren Klappenelemente (28) Gleitflächen (22, 22 ') aufweisen, die während der Änderung in kontinuierlichem Kontakt sind,
**dadurch gekennzeichnet, dass**
die verschiebbaren Klappenelemente (28) schräg gestellt sind.

2. Düse nach Anspruch 1, wobei die formgebende Klappeneinrichtung (24) stromabwärts des linearen Randes (19') abgewinkelt ist.

3. Düse nach einem der vorhergehenden Ansprüche, wobei die formgebende Klappeneinrichtung (24) benachbarte Klappeneinrichtungen (18, 26, 28) in den durch die Gleitflächen (22, 22') definierten Bereichen überlagert.

4. Düse nach einem der Ansprüche 1 bis 3, wobei das zentrale Klappenelement (27) die verschiebbaren Klappenelementen (28) innerhalb der durch die Gleitflächen (22, 22') definierten Bereiche überlagert.

5. Düse nach einem der vorhergehenden Ansprüche, wobei die Betätigungseinrichtung formgebende Klappeneinrichtungen (24) umfasst.

6. Düse nach einem der vorhergehenden Ansprüche, wobei die stromabwärtige lineare Kante (19') der formgebenden Klappeneinrichtung (24) einen Winkel (a) von etwa 120° aufweist.

7. Düse nach einem der vorhergehenden Ansprüche, wobei die Düse eine konvergent-divergente Düse (14) umfassend eine vordere (60) und hintere (60') Klappenanordnung ist, wobei die vorderen verschiebbaren Klappenelemente (28) schräg gestellt sind zum Verbinden mit den hinteren verschiebbaren Klappenelementen (28') in einer solchen Weise, dass der stromabwärtige Abschnitt (16') der Klappeneinrichtung eine stromabwärtige lineare Kante (19') bildet.

8. Düse nach Anspruch 7, wobei die vordere Klappenanordnung (60) stromabwärtige lineare Kanten (19') umfasst, die parallel zu stromaufwärtigen linearen Kanten (19) der hinteren Klappenanordnung (60') sind und somit eine Abdichtung bereitstellen.

9. Flugzeug umfassend eine variierbare Abgasdüse (14) nach einem der vorhergehenden Ansprüche 1 bis 8.

10. Verfahren zum Variieren einer variierbaren Abgasdüse (14) für ein Düsentriebwerk (1), folgende Schritte umfassend:
a) bereitstellen von Klappeneinrichtungen (18), die über einen stromaufwärtigen Abschnitt der Düse schwenkbar mit dem Düsentriebwerk verbindbar sind, wobei die Klappeneinrichtungen (18) Zwischenklappeneinrichtungen (26) und formgebende Klappeneinrichtungen (24, 62) umfassen, wobei die Zwischenklappeneinrichtung (26) zwischen den formgebenden Klappeneinrichtungen (24, 62) angeordnet ist, wobei die Zwischenklappeneinrichtung (26) ein zentrales Klappenelement (27) und verschiebbare Klappenelemente (28) umfasst, die an gegenüberliegenden Seiten des zentralen Klappenelements (27) angeordnet sind, wobei die verschiebbaren Klappenelemente (28) schräg gestellt sind,
b) betätigen der Klappeneinrichtung (18, 24, 26, 27, 28, 62) zur Änderung der Querschnittsfläche (A1, A2) der Düse (14) zwischen einer ersten Position und einer zweiten Position mittels einer Betätigungseinrichtung (20, 20h,),
c) bereitstellen eines kontinuierlichen Kontakts zwischen benachbarten Klappeneinrichtungen (18, 24, 26, 27, 28, 62) über eine Gleitfläche (22, 22') jeweiliger Klappeneinrichtungen (18, 24, 26, 27, 28, 62) während der Änderung.

11. Verfahren nach Anspruch 10, ferner umfassend den folgenden Schritt:
d) betätigen der formgebenden Klappeneinrichtung (20, 24, 62) zum bereitstellen der Änderung.

12. Verfahren nach Anspruch 10 oder 11, ferner umfassend den folgenden Schritt: e) bereitstellen der Änderung durch die Betätigungseinrichtung (20, 20h, 27, 62) auf eine solche Art und Weise, dass eine nach innen gerichtete Kraft (F1) bereitgestellt wird, die einer Düsenstrahlkraft (F2) vom Düsentriebwerk (1) während des Einsatzes entgegenwirkt.

## Revendications

1. Tuyère d'échappement variable (14) pour un moteur à réaction (1), la tuyère (14) comprend une partie amont (16), un moyen de volet (18) pouvant être relié de façon pivotante au moteur à réaction (1) par l'intermédiaire de la partie amont (16), le moyen de volet (18) comprend une partie aval (16') formant un bord linéaire aval (19'), un moyen actionneur (20, 20h) étant agencé pour actionner ledit moyen de volet (18) pour une variation de l'aire en coupe transversale (A1, A2) des tuyères (14) entre une première position et une deuxième position,
le moyen de volet (18) comprend des moyens de volet de formation de forme (24, 62) pour former l'aire en coupe transversale (A1, A2) et un moyen de volet intermédiaire (26), étant interposé entre lesdits moyens de volet de formation de forme (24, 62), dans laquelle ledit moyen de volet intermédiaire (26) comprend un élément de volet central (27) et des éléments de volet coulissants (28) agencés au niveau de côtés opposés de l'élément de volet central (27), dans laquelle le moyen de volet de formation de forme (24), l'élément de volet central (27) et les éléments de volet coulissants (28) ont des surfaces de coulissement (22, 22') en contact continu pendant ladite variation, **caractérisée en ce que**
les éléments de volet coulissants (28) sont faussés.

2. Tuyère selon la revendication 1, dans laquelle le bord linéaire aval (19') du moyen de volet de formation de forme (24) est incliné.

3. Tuyère selon l'une quelconque des revendications précédentes, dans laquelle le moyen de volet de formation de forme (24) recouvre des moyens de volet adjacents (18, 26, 28) au sein de zones définies par les surfaces de coulissement (22, 22').

4. Tuyère selon l'une quelconque des revendications 1 à 3, dans laquelle l'élément de volet central (27) recouvre les éléments de volet coulissants (28) au sein de zones définies par les surfaces de coulissement (22, 22').

5. Tuyère selon l'une quelconque des revendications précédentes, dans laquelle le moyen actionneur comprend un moyen de volet de formation de forme (24).

6. Tuyère selon l'une quelconque des revendications précédentes, dans laquelle ledit bord linéaire aval (19') du moyen de volet de formation de forme (24) présente un angle (a) d'environ 120°.

7. Tuyère selon l'une quelconque des revendications précédentes, dans laquelle la tuyère est une tuyère convergente-divergente (14) comprenant un agencement de volet avant (60) et arrière (60'), des éléments de volet coulissants avant (28) sont faussés pour fusionner avec des éléments de volet coulissants arrière (28') d'une manière telle que la partie aval (16') du moyen de volet forme un bord linéaire aval (19').

8. Tuyère selon la revendication 7, dans laquelle l'agencement de volet avant (60) comprend des bords linéaires aval (19') étant parallèles avec des bords linéaires amont (19) de l'agencement de volet arrière (60') fournissant une étanchéité.

9. Aéronef comprenant une tuyère d'échappement variable (14) selon l'une quelconque des revendications 1 à 8 précédentes.

10. Procédé pour faire varier une tuyère d'échappement variable (14) pour un moteur à réaction (1), comprenant les étapes :
a) fourniture d'un moyen de volet (18) pouvant être relié de façon pivotante au moteur à réaction par l'intermédiaire d'une partie amont de la tuyère, dans laquelle lesdits moyens de volet (18) comprennent un moyen de volet intermédiaire (26) et des moyens de volet de formation de forme (24, 62), dans laquelle le moyen de volet intermédiaire (26) est interposé entre les moyens de volet de formation de forme (24, 62), dans laquelle ledit moyen de volet intermédiaire (26) comprend un élément de volet central (27) et des éléments de volet coulissants (28) agencés au niveau de côtés opposés de l'élément de volet central (27), dans laquelle les éléments de volet coulissants (28) sont faussés,
b) actionnement dudit moyen de volet (18, 24, 26, 27, 28, 62) pour une variation de l'aire en coupe transversale (A1, A2) des tuyères (14) entre une première position et une deuxième position à l'aide d'un moyen actionneur (20, 20h,),
c) fourniture d'un contact continu entre des moyens de volet adjacents (18, 24, 26, 27, 28, 62) par l'intermédiaire d'une surface de glissement (22, 22') de moyens de volet respectifs (18, 24, 26, 27, 28, 62) pendant ladite variation.

11. Procédé selon la revendication 10, comprenant en outre l'étape :
d) actionnement de moyens de volet de formation de forme (20, 24, 62) pour fournir ladite variation.

12. Procédé selon la revendication 10 ou 11, comprenant en outre l'étape :
e) fourniture de ladite variation par ledit moyen actionneur (20, 20h, , 27, 62) d'une manière telle qu'une force vers l'intérieur (F1) est fournie, contrecarrant une force de courant-jet (F2) provenant du moteur à réaction (1) pendant l'utilisation.
